# EUROPEAN PATENT SPECIFICATION

(11) **EP 3 099 019 B1**
(45) Date of publication and mention of the grant of the patent: **02.01.2019**
(21) Application number: 15169408.0
(22) Date of filing: 27.05.2015
(51) Int. Cl.: H04L 12/40, G06F 9/455

(54) **METHOD, COMPUTER PROGRAM PRODUCT, AND CONTROL UNIT FOR AN AUTOMOTIVE VEHICLE**
VERFAHREN, COMPUTERPROGRAMMPRODUKT UND STEUEREINHEIT FÜR EIN KRAFTFAHRZEUG
PROCÉDÉ, PRODUIT DE PROGRAMME INFORMATIQUE ET UNITÉ DE COMMANDE POUR UN VÉHICULE AUTOMOBILE

(43) Date of publication of application: 30.11.2016
(73) Proprietor: OpenSynergy GmbH, 10245 Berlin (DE)
(72) Inventor: PRANTNER, Heinz, 10777 Berlin (DE); BERNARD, Pierre Antoine, 10435 Berlin (DE)
(74) Representative: Lavoix

(56) References cited:
- DE-A1-102012 205 301
- US-A1- 2010 292 867
- US-A1- 2011 237 234

## Description

The present invention concerns a method for accessing on a control unit for an automotive vehicle a field bus, the field bus being a dedicated automotive bus and being adapted to transport messages having a message identifier, the message identifier defining the content of the message, the control unit having at least one processor and a memory.

Further, the present invention concerns a computer program product comprising commands for executing the method according to an embodiment disclosed herein, when loaded and executed on a computer.

Finally, the present invention concerns, a control unit for an automotive vehicle comprising at least one processor and a memory; a hardware controller for a field bus dedicated for automotive use, the field bus is adapted to transport messages having a message identifier, the message identifier defining the content of the message.

US 2010/0292867 A1 relates to a motor vehicle control device. The vehicle control device may include on a microkernel AUTOSAR and a second guest operating system. IPC communication means are provided, so that two systems can communicate between each other.

DE 10 2012 205 301 A1 discloses a system comprising computer hardware, a virtualization layer running on the computer hardware. Two virtual machines may run on the virtualization layer, on the first virtual machine Linux may be run as operating system and on the second virtual machine AUTOSAR may be run as operating system. Further, the virtualization unit assigns an input/output unit to virtual input/output units.

For automotive field busses the CAN (Controller area network) protocol is widely used. The CAN Protocol specifies the transport of CAN messages over a CAN bus. CAN messages are identified with an identifier have a variable payload length L with up to 8 octets. The exchange of CAN messages between peers is facilitated by the interworking of CAN Transceivers, CAN Controllers - both realized in Hardware - and the CAN Driver, the software operating on the controller in hardware.

Further, a standardized Automotive Open System Architecture (AUTOSAR) is known, which provides a defined environment for embedded software in the automotive field. For example AUTOSAR defines a CAN Driver. The CAN Driver provides an Application Program Interface CAN API to a CAN User in AUTOSAR CAN communication stack. The CAN User can send and receive CAN messages via the CAN API.

Also some hardware drivers for Linux for CAN bus exist. For example, a CAN socket API has been contributed by Volkswagen to the Linux kernel. The CAN Socket is a standard BSD socket of a specific CAN protocol family.

Automotive Systems are facing an increasing demand for additional functionality and features for intelligent driver assistance and the same time are confronted with constraints and restrictions on resources like space (physical space), power consumption, input/output devices, processing power, memory (address space), time (fast boot requirements) and pressure on cost with the need to balance and share resources between applications.

AUTOSAR has undertaken major efforts to make automotive software and systems safe and secure and to provide standardized interfaces to enable exchange and interworking between different vendors, OEMs, tier 1 suppliers and tier 2 suppliers. However, AUTOSAR does not provide frameworks for sophisticated application, like for example multimedia applications.

The Linux and Android world provide feature rich, robust and proven frameworks for sophisticated applications with high demands on end user interface and according graphical presentation for multiple media channels.

Object of the invention is to provide in a simple way messages of an automotive field bus from a real time operating system to one or more other operating systems.

The present invention is defined in the appended independent claims to which reference should be made. Advantageous features are set out in the appended dependent claims.

One solution to solve the mentioned problems is to introduce a virtualization layer, such as a micro kernel or a hypervisor technology, for the partitioning of software domains and applications and the sharing of resources.

Sharing of resources for input/output in a virtualized environment is a challenge for the software architecture and implementation. The given invention provides a solution for accessing the automotive field bus, for example a CAN bus, and exchanging the messages for multiple real time and/or non real time partitions.

The invention solves the problem by definition of a system and software architecture and invention brings together the best of the two domains to fulfill the demands on stability, safety, security, real time and automotive responsiveness, as well as user satisfaction and convenience.

The invention enables the access of an automotive field bus, for example a CAN bus, and the respective messages for multiple partitions and applications.

The invention enables the exchange of CAN messages between an automotive guest system, for example AUTOSAR, and infotainment guest systems, e.g. Linux or Android guest systems.

The invention enables Linux or Android Applications to remotely utilize a full featured automotive grade driver for the automotive field bus, so that a secure and efficient integration of feature rich high performance infotainment application processor into automotive environment is enabled. In other words, the invention enables the interworking of automotive and infotainment domains.

The invention allows for the hardware consolidation and the according cost saving by the introduction of a virtualized ECU architecture.

Further, the invention provides a flexible system and software architecture. Further, already defined hardware drivers, for example according to AUTOSAR, may be reused.

Further advantages, features, aspects and details are evident from the dependent claims, the description and the drawings.

So that the manner in which the above recited features of the present invention can be understood in detail, a more particular description of the invention, briefly summarized above, may be read by reference to embodiments. The accompanying drawings relate to embodiments of the invention and are described in the following:
Fig. 1 shows schematically the hardware of an electronic control unit (ECU),
Fig. 2 shows schematically different layers of operating systems which are performed on a processor of an ECU;
Fig. 3 shows schematically different layers of a real time automotive operating system;
Fig. 4 shows schematically an architecture for an ECU according to an embodiment of the invention; and
Fig. 5 shows schematically an architecture for an ECU according to another embodiment of the invention.

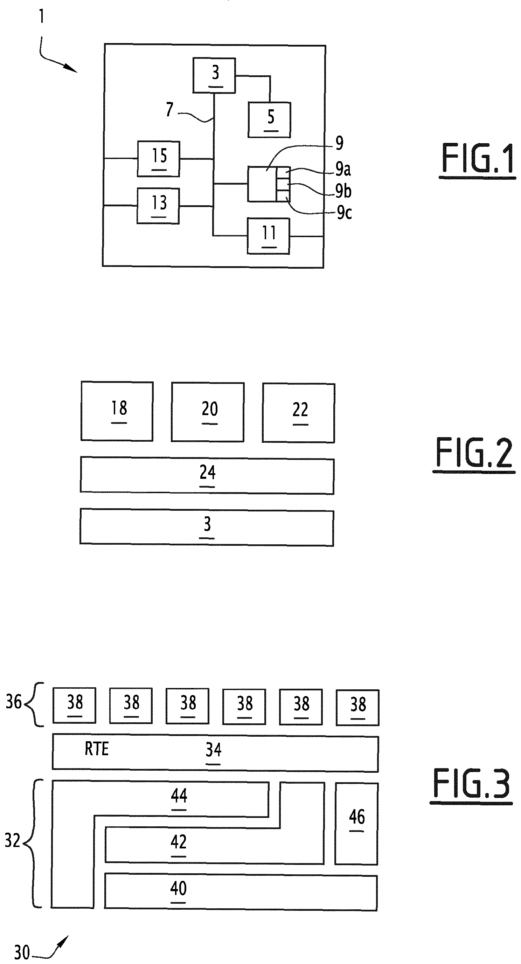

Figure 1 shows schematically an electronic control unit (ECU) 1. According to an embodiment, an ECU comprises one or more processors 3 connected to one or more memories 5. Each processor may comprise one or more processor cores. For example, the ECU may be realized as a system on chip (SoC). Further, the ECU 1 may comprise interface for connecting to one or more bus systems, for example one or more hardware controller 9 for controller area network (CAN) busses and/or one or more hardware controller 11 for FlexRay busses. The ECU may also comprise further controller for connecting to one or more wireless connecting means, for example a Bluetooth connection.

Usually, an automotive vehicle comprises a plurality of electronic control units (ECU), which may be assigned to different units of the vehicle, for example the steering wheel, the brakes, the windows, the motor etc. For example, the ECU may be connected to some sensors or drivers via an interface 13, for example to drive the window, or to sense the angulation of the steering wheel, the level of oil or water in the motor. Some ECUs are providing information for the user of the vehicle, for example information about the status of the vehicle, for example the angulation of the steering wheel, temperature information, the use the status of the vehicle to display enhanced information, and the like. These ECUs may be connected to one or more displays via one or more display ports 15.

According to an embodiment, the ECU is provided as an embedded system in a vehicle.

A Controller Area Network (CAN) bus is a serial (field) bus system dedicated for use in automotive vehicles. The CAN bus is a Carrier Sense Multiple Access/Collision Resolution (CSMA/CR) bus. The available speed for the CAN busses depends on the lengths of the cables and may be, actually, by up to 1 Mbit/s. The CAN is standardized according to ISO 11898.

Each CAN message includes a message identifier, which identifies the content of the message. The message identifier is statically configured and corresponds to the priority of the message. Therefore, the messages have a fixed priority. For example, sensors connected to the CAN Bus may for each parameter, like temperature, voltage, pressure respectively have their own identifier. Other messages with other message identifiers may relate to the angle of the steering wheel, or the rotational speed of the tires. In other embodiments, several parameters are sent with a single message having the same message identifier. More generally defined, the messages may contain the present status of different devices of the automotive vehicle, for example vehicle sensor information, and/or one or more commands for different devices of the automotive vehicle, for example to drive an actuator.

For example, according to an embodiment, a CAN Message may include as a payload one or more signals S1, S2, S3, ...Sn with a different length. One signal can occupy 1 to 64 bits. One CAN message can carry 1 to N signals S. The signal layout of CAN messages for each CAN identifier is statically configured and not encoded in the CAN protocol. For example, the automobile manufacturer defines the message identifier and the content of the messages.

The identifier also represents the priority of the message. The identifier enables the receiving device to identify whether the message is intended or useful for him or not. Further, the message has not a static length but a different length which depends on the data to be transmitted.

According to an embodiment, the hardware controller 9 for the CAN Bus is adapted to read the identifier of the CAN messages and distributes them respectively in a mail box. For example, the hardware controller 9 provides for each identifier of a CAN message a separate mailbox 9a, 9b, 9c. Typically, according to an embodiment, if a second message comes from with the same identifier, the previous message is overwritten. Thus, the mailboxes 9a, 9b, 9c contain always the most recent CAN message for the respective identifier. In other embodiments, one mailbox or a plurality of mailboxes 9a, 9b, 9c may be provided for several identifiers.

As shown in Figure 2, on an ECU one or more guest systems 18, 20, 22 are running by using a virtualization layer 24, e.g. microkernel or a hypervisor, on the microprocessor 3 of the ECU. In other words, the virtualizing layer 24 enables several operating systems 18, 20, 22 to run concurrently on the microprocessor 3. In other words, each guest system runs on another partition. For example, the guest systems are guest operating systems.

One example of a virtualizing layer 24 is a hypervisor between the hardware, for example a system on chip (SoC), and guest systems 18, 20, 22. The hypervisor runs directly on the hardware, in particular a processor 3, to control the hardware and manages the guest systems. Each guest system is separate and independent. Further, the hypervisor configuration assigns the hardware resources to the respective guest systems.

Another example of a virtualizing layer 24 is a microkernel operating system. A microkernel operating system may also be used as a virtualizing layer between the hardware and guest systems. The microkernel runs directly on the hardware. A microkernel is a minimal operating system construct, which makes mechanisms available in order to implement operating system services. This comprises substantially: the management of the address space, the provision and management of mechanisms for separating program sections and their thread management, and mechanisms for communication between different guest systems or partitions (inter-partition-communication (IPC)).

According to the invention, one of the guest systems 18, 20, 22 is specific for embedded systems and automotive applications. Such an automotive guest system is a real time operating system, which enables the treatment of data in real time. Due to security and safety constraints, typically such an automotive guest system is a statically configured system. In other words, the automotive guest system configuration is not changed during runtime.

For example, a real time operating system has predefined or guaranteed response times. According to an embodiment, they may have predictable response times and behavior, in particular for the scheduling and the memory management.

For example, in an embodiment, the automotive guest system comprises or consists of defined components. In other words each component of the automotive guest system has predefined application program interfaces (API) and runtime characteristics which enables interoperability between software and/or hardware of different manufacturers.

One example for such an automotive specific guest system is an operating system configured according to the AUTomotive Open System Architecture (AUTOSAR) standard. The AUTSAR standard has several releases, the latest release is version 4.2. The general structure disclosed herein relates to all releases.

AUTomotive Open System Architecture (AUTOSAR) is an international association with the aim of establishing an open standard for electric/electronics architectures in motor vehicles. The members are various automobile manufacturers and suppliers of electronics components.

The automotive guest system decouples the software from the hardware of a device or of an abstraction layer, like the hypervisor or the microkernel.

Fig. 3 shows the software architecture of an embodiment of an automotive guest system. The software architecture 30 defined is characterized by three main layers 32, 34, 36, building on each other. The lowest main layer is called basic software 32. The uppermost main layer 36 contains the actual applications or software components 38. The central main layer 34, Run Time Environment-RTE, enables a communication between the application layer 36 and basic software 32. According to an embodiment, one or more software components 38 are real time software components.

According to an embodiment of the automotive guest system, the RTE 34 knows which data are communicated at what time between the respective software components 38 or between one or more software components 38 and the basic software 32. For example, the timing is specified and/or when and which data is offered and consumed by the respective components. In other words the RTE provides and enforces clearly defined interfaces and runtime behavior.

For example, in the automotive guest system, the basic software comprises of a plurality of modules, which in turn belong to different sublayers (layers) and stacks. For example the basic software comprises a microcontroller abstraction layer (MCAL) 40, an ECU abstraction layer (ECU-AL) 42 and a service layer 44. Further, the basic software includes the operating system 46.

For example, the defined automotive guest system comprises defined hardware drivers for field busses in the automotive field and the respective communication stack. The hardware drivers are provided in the microcontroller abstraction layer 40 and have predefined application program interfaces (API) for the higher layers, here the ECU abstraction layer 42. An example for the hardware driver is the CAN driver which provides a CAN API to the CAN user in the basic software.

According to some embodiment, which may be combined with other embodiments described herein, the MCAL 40 includes components to make the upper layers independent from the microcontroller or the virtualizing layer 24. For example, the MCAL includes components like hardware drivers, for example to access periphery components or the memory, here via the virtualizing layer 24. For example the MCAL may include a CAN Driver or the automotive field bus driver.

According to some embodiment, which may be combined with other embodiments described herein, the ECU AL provides interfaces between the MCAL 40 and the higher layers, so that the higher layers are independent from the hardware of the ECU. The program interfaces provide access to the periphery and the devices independently where they are arranged and how the periphery and the devices are connected to the processor.

According to some embodiment, which may be combined with other embodiments described herein, the service layer 44 provides different services for the RTE, for example communication and network services, memory management, diagnostic services and the state management of the automotive guest system, for example AUTOSAR. According to an embodiment, the different services are provided in specific modules, for example a communication module (COM -module) or a PDU-router.

According to an embodiment, a software component 38 is independent from the type of the processor of the ECU.

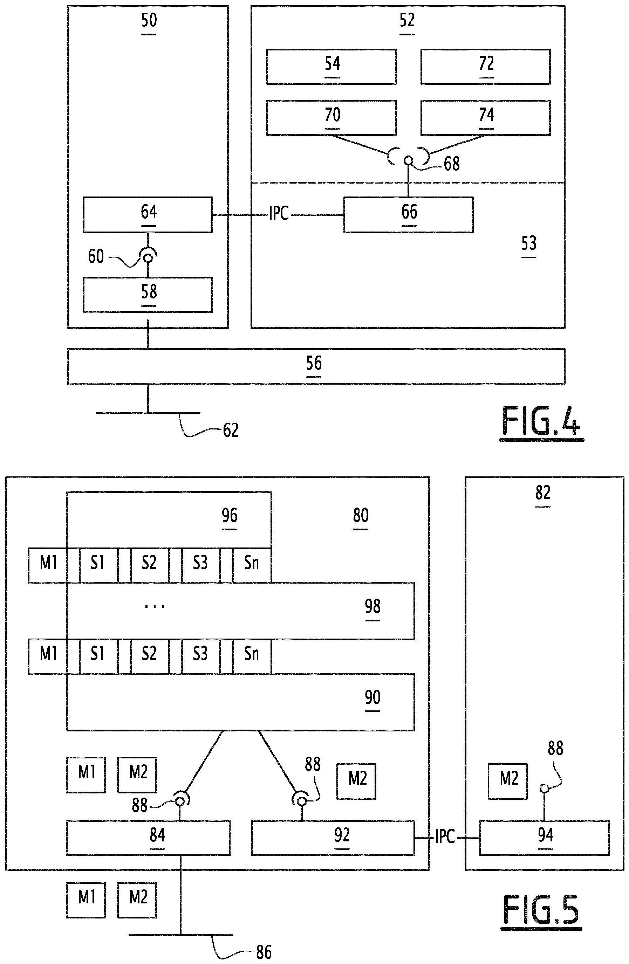

Fig. 4 shows schematically an architecture for an ECU according to an embodiment of the invention. The ECU comprises a first partition 50 with a first guest system, which is a real time operating system dedicated for automotive use, for example an operating system comprising components according to the AUTOSAR. The first guest system is specific for embedded systems and automotive applications. Due to security and safety constraints, typically the first guest system is a statically configured system.

Further, the ECU comprises a second partition 52 with a second guest system 53, which may be a real time operating system or a non real time operating system, for example Linux or Android.

According to an embodiment, which may be combined with other embodiments disclosed herein, multimedia and/or infotainment applications 54 may run on the second operating system. For example, the multimedia and/or infotainment applications may use the information from (automotive) sensors or the status of the vehicle.

According to an embodiment, a virtualization layer 56 is provided that assigns hardware resources, for example memory and processor resources, to the first guest system and the second guest system 53.

The first guest system running in the first partition 50 comprises a hardware driver 58, for example a CAN driver, which provides a specific field bus API 60, which is configured for the hardware driver 58. The hardware driver 58 has direct access to the hardware controller (not shown in Figure 4) which is connected to the field bus 62, for example a CAN Bus as described here above. In other words, the virtualizing layer 56 enables direct access for the hardware driver 58 to the hardware controller, in particular without simulating a hardware or transforming an address space.

According to an embodiment, the hardware driver 58 has access to the mailboxes 9a, 9b, 9c of the hardware controller 9. Thus, the hardware driver 58 may regularly read messages from the mailboxes 9a, 9b, 9c and/or send message on the field bus 62 via the hardware controller.

According to an embodiment, the hardware driver, for example the CAN driver, is predefined, for example according to the AUTOSAR standard, and has therefore a defined API.
Further, the first guest system comprises a message forwarding component 64, which is also statically defined. The message forwarding component 64 is adapted to exchange messages of the field bus 62 via the hardware driver 58. For that purpose the message forwarding component 64 uses the field bus API 60.

According to an embodiment, the message forwarding component 64 is not adapted to decode the messages to be forwarded to the at least one second guest system.

The second guest system is provided with a virtual (field bus) driver 66, which is connected to the message forwarding component 64 via an IPC mechanism provided by the virtualization layer 56, for example a microkernel or a hypervisor.

The virtual driver 66 provides an API for the applications or components in a user or application layer 68 having access to the virtual driver 66. The API is according to an embodiment a socket API, for example the CAN socket API as contributed by Volkswagen to the Linux kernel.

Thus the applications 54 may have access via a decoder 70 to the virtual driver 66. The decoder 70 may extract signals from a message of the field bus.

Alternatively or additionally a console 72 may have access via field bus utilities 74 to the virtual driver 66.

Further, it is also possible also for the applications 54 and the console 72 to send messages via the field bus 62, for example the CAN bus. These messages are then provided via the IPC to the message forwarding component 64, which is connected to the hardware driver 58, which then sends them via the hardware controller of the field bus. The applications 54, 72 running on the second operating system believe to receive and send automotive field bus messages directly on the automotive field bus. Thus, according to an embodiment, they do not see the message forwarding component 64 and the hardware driver 58 of the first guest system running in the first partition 50.

In the following the functioning of the invention is explained.

When receiving a message from the automotive field bus 62, for example by reading the respective mailboxes 9a, 9b, 9c of the hardware controller 9, the hardware driver 58 provides the message via the field bus API 60 to the message forwarding component 64.

The message forwarding component sends the message via an IPC link to the virtual field bus driver 66.

According to an example, the virtual driver 66 provides the message via the API 68 to a decoder 70. The decoder decodes the signals S1, S2, S3 .. Sn from the message and provides the signals to the application 54. The application uses the decoded signals, for example for displaying a map depending on the steering wheel angle and/or the speed of the vehicle.

Further, also applications may send messages to vie the vehicle field bus. For example, a user may use the console application 72 to send a specific application. The field bus utilities 74 encode the signal to a message and provide the message via API 68 to the virtual driver 66. The virtual driver 66 sends the message via the IPC link to the message forwarding component 64, which in turn provides the message via the API 60 to the hardware driver 58. The hardware driver 58 then sends the message, in particular via the hardware controller on the automotive field bus 62.

Fig. 5 shows schematically an architecture for an ECU according to another embodiment of the invention. The ECU comprises a first partition 80 with a first guest system, which is a real time operating system dedicated for automotive use, for example as described here-above. As an example, the components of the operating system are specified according to AUTOSAR. Further, the ECU comprises a second partition 82 with a second guest system, which may be a real time operating system or a non real time operating system, for example Linux.

According to an embodiment, which may be combined with other embodiments disclosed herein, multimedia and/or infotainment applications may run on the second operating system.

The virtualization layer is not shown in Figure 5.

The first guest system running in the first partition 80 comprises a hardware (field bus) driver 84, for example a CAN driver, which provides a specific field bus API 88, which is configured for the hardware driver 84. The hardware driver 84 has direct access to the hardware controller (not shown in Figure 5) which is connected to the field bus 86, for example a CAN Bus as described here-above. In other words, the virtualization layer does not simulate a CAN controller or field bus controller to the first guest system.

The field bus API 88, for example the CAN API, is standardized, for example according to the AUTOSAR standard.

Further, the first guest system comprises a message forwarding component 90. For example, the message forwarding component 90 may comprise, CANIF, PDUR and COM components according to the AUTOSAR standard. According to an embodiment, the message forwarding component 90, for example the COM component, is adapted to decode the message to signals and to encode signals to a message for the field bus 86.

The message forwarding component 90 is statically defined. The message forwarding component 90 is adapted to exchange messages of the field bus 86 via the hardware driver 84. For that purpose the message forwarding component 64 uses the field bus API 88.

According to an embodiment, the first guest system comprises a virtual driver 92. The virtual driver 92 provides also the field bus API 88, for example a CAN bus API, for the message forwarding component 90. In other words, the field bus API 88 of the hardware driver 84 and the field bus API 88 of the virtual driver 92 are identical.

The second guest system is provided with a virtual (field bus) driver 94, which is connected to the virtual driver 92 of the first guest system via an IPC mechanism provided by the virtualization layer, for example a microkernel or a hypervisor.

The virtual driver 94 provides a field bus API 88 for the applications running on the second guest system. Thus, the messages are exchanged via the partitions 80, 82 using the IPC mechanisms. According to an embodiment, the field bus API 88 of the virtual driver 94 of the second guest system running in the second partition, is identical to the API 88 of the hardware driver 84 of the first guest system running in the first partition 80.

As the virtual driver 92 uses the field bus API 88 for the message forwarding component 90 the transmission of a message via the IPC connection to the second guest system seems to be a field bus, for example a CAN bus. Also for the applications running on the second guest system using the virtual driver 94 the messages received or transmitted via the IPC seem to be transmitted via a CAN bus.

According to an embodiment, which may be combined with other embodiment disclosed herein, the message forwarding component 90 is adapted to distribute the messages dependent on their message identifier. For example, only messages with a specific message identifier are forwarded to the second guest system.

Further, according to an embodiment, only messages with another (predefined) message identifier are forwarded and decoded within the first guest system (as detailed below). For example, for decoding and encoding the messages, the message forwarding component 90 may comprise a COM component, for example as defined according to the AUTOSAR standard.

It should be noted that not only one second guest operating device may be provided but also multiple second guest systems. Thus, the messages may be distributed by the message forwarding component 90 according to the requirements of the respective second guest systems. Also some messages may be duplicated and provided to several second guest systems via respective virtual drivers 92.

According to another embodiment, one CAN driver may support multiple hardware controllers, which will be utilized in the virtual driver of the first guest system to distinguish between multiple virtual driver instances in second guest systems.

As discloses above, messages with other message identifiers may be forwarded to one or more software applications 96 via a run time environment 98, after they have been decoded into several signals S1, S2, S3 ... Sn.

The message forwarding component 90, the hardware driver 84 and the virtual driver 92 form part of the basic software are described here-above. The applications 96 are in the application layer and are connected via defined static communication links in the run-time environment to the basic software layer.

According to an example, the software in the first partition 80 is provided according to the AUTOSAR standard.

As the virtual driver 94 may provide a compatible CAN API to the upper layer, this enable the seamless integration into a stack of a dedicated automotive operating system, for example an AUTOSAR stack, if used as an operating system of the second guest system.

In the following an example using two messages M1 and M2 is described. The messages M1 and M2 having different message identifiers. The message M1 is dedicated for the application component 96 and the message M2 is dedicated for an application running on the second guest system in the second partition 82.

When the messages M1 and M2 are received by the hardware controller they are placed in their respective mailboxes 9a, 9b, 9c. For example message M1 is placed in mailbox 9a and message M2 is placed in mailbox 9b. Then, the hardware driver 84 fetches the messages and provides them to the message forwarding component 90. The message forwarding component 90 reads the message identifiers. When the message forwarding component 90 identifies the first message identifier, the message forwarding component 90 decodes the message M1 in their respective signals S1, S2, S3 ... Sn and provides it to the run time environment 98. The run time environment forwards the signals S1, S2, S3 ... Sn to the application 96 as preconfigured.

When the message forwarding component 90 identifies the second message identifier of the second message M2, the message forwarding components 90 transmits the message to the virtual driver 92. The virtual driver 92 sends the message via IPC to the virtual driver 94 of the second guest system, which forwards it to the respective application running on the second guest system.

The application running on the second guest system in the second partition 82 may also send a message via the field bus 86. The message is provided via the API 88 to the virtual driver 94 as if the virtual driver would be a hardware driver with direct connection to the field bus 86. Then, the message is send via the IPC link to the virtual driver 92 of the first guest system in the first partition 80, it forwards this message to the message forwarding component 90. The message is then provided via the API 88 to the hardware driver 84, which sends it via the automotive field bus, here the CAN bus.

Also in case the application 96 would like to send a message via the field bus 86, it provides one or more signals via the run-time environment to the message forwarding component 90. The message forwarding component encodes the one or more signals to a message and provides it to the hardware driver 84, which sends the message via the field bus 86.

## Claims

1. Method for accessing on a control unit for an automotive vehicle a field bus (62, 86), the field bus being a dedicated automotive bus and being adapted to transport messages having a message identifier, the message identifier defining the content of the message, the control unit having at least one processor (3) and a memory (5), the method comprising:
assigning, by a virtualizing layer (24), resources of the at least one processor (3) and the memory to a plurality of guest systems (18, 20, 22, 30);
enabling, by the virtualizing layer (24), a communication between at least two of the guest systems via an inter partition communication link ;
receiving one or more messages (M1, M2) from the field bus (62, 86) by a hardware driver (58, 84) of a first guest system (18, 30) running on the virtualizing layer (24, 56), the first guest system being a real time operating system, wherein a real time operating system is an operating system that has predefined or guaranteed response times;
providing, by the hardware driver (58, 84), the one or more messages to a message forwarding component (64, 90) of the first guest system (18, 30);
reading, by the message forwarding component (90), the message identifier;
forwarding, by the message forwarding component (64, 90), selected messages (M2) with predefined message identifiers to a first virtual driver of a second guest system running on the virtualization layer via the inter partition communication link; and
providing, by the first virtual driver (66, 94), the messages received by the first virtual driver, to a component or application (54, 70, 72, 74) of the second guest system (53).

2. Method according to claim 1, wherein the first guest system is an automotive operating system and/or is statically configured.

3. Method according to claim 1 or 2, wherein the first guest system comprises a basic software (32) and a run time environment (34), the run time environment providing communication channels between the basic software (32) and one or more applications (38), wherein the basic software (32) comprises the hardware driver.

4. Method according to one of the preceding claims, wherein forwarding, by the message forwarding component (64, 90), at least one of the received messages (M1, M2) to a first virtual driver of a second guest system comprises:
providing, by the message forwarding component (64, 90), the at least one of the received messages (M1, M2) to a second virtual driver (92) of first guest system, wherein, in particular, the second virtual driver (92) has the same application program interface to the message forwarding component (64, 90) as the hardware driver (58, 84); and
sending, by the second virtual driver (92), the at least one of the received messages to the first virtual driver (94) via the inter partition communication link.

5. Method according to one of the preceding claims, wherein the hardware driver (58, 84) is connected via a hardware controller (9) to the field bus (62, 86), the hardware controller (9) comprising a plurality of mailboxes (9a, 9b, 9c), wherein each mailbox (9a, 9b, 9c) is for a message having a respective message identifier, the method further comprising in the receiving step:
reading, by the first hardware driver (58, 84), the messages (M1, M2) from the plurality of mailboxes.

6. Method according to one of the preceding claims, wherein the at least one second guest system is a non-real time operating system, in particular for non real time applications and/or infotainment applications, in particular is a Linux or Android operating system.

7. Method according to one of the preceding claims, wherein the first virtual driver has the same application program interface for the at least one component or application as the hardware driver (58, 84) for the message forwarding component (64, 90).

8. Method according to one of the preceding claims, further comprising: decoding the at least one message (M1, M2) by the at least one application or component of the second guest system.

9. Method according to one of the preceding claims, wherein the message identifiers are statically configured and/or correspond to the priority of the message.

10. Method according to one of the preceding claims, wherein the field bus is a Controller Area Network, CAN, bus and/or wherein the messages contain one or more present status of different devices of the automotive vehicle and/or one or more commands for different devices of the automotive vehicle.

11. Method according to one of the preceding claims, wherein the virtualizing layer is a hypervisor or a microkernel.

12. Computer program product comprising instructions, which when the program is executed by a computer, cause the computer to carry out all the steps of the method according to any one of the preceding claims.

13. Control unit for an automotive vehicle comprising:
at least one processor (3) and a memory (5);
a hardware controller (9) for a field bus dedicated for automotive use, the field bus is adapted to transport messages having a message identifier, the message identifier defining the content of the message;
a virtualizing layer (24) adapted to run on the at least one processor (3), to assign resources of the at least one processor and the memory to a plurality of guest systems (18, 20, 22, 30), and to enable a communication between at least two of the guest systems via an inter partition communication link;
a first guest system (18, 30) running on the virtualizing layer, the first guest system being a real time operating system, and comprising a hardware driver for accessing the hardware controller (9), the one or more messages being received from the field bus, and for receiving or reading one or more messages (M1, M2) from the hardware controller (9) and providing the one more messages to a message forwarding component (64) of the first guest system (18, 30), wherein a real time operating system is an operating system that has predefined or guaranteed response times; and
at least one second guest system (20, 22) running on the virtualizing layer comprising a first virtual driver for receiving messages from the field bus and providing the received messages to a component or application of the second guest system;
wherein the message forwarding component is adapted to read the message identifier and to forward selected messages (M2) of the automotive field bus with predefined message identifiers to the first virtual driver via the inter partition communication link.

14. Control unit according to claim 13 comprising further means to perform all the steps of the method according to any one of claims 2 to 11.

## Patentansprüche

1. Verfahren zum Zugreifen auf einen Feldbus (62, 86) in einer Steuereinheit für ein Kraftfahrzeug, wobei der Feldbus ein zugewiesener Fahrzeugbus und dafür eingerichtet ist, Nachrichten mit einer Nachrichtenkennung zu transportieren, wobei die Nachrichtenkennung den Inhalt der Nachricht definiert, wobei die Steuereinheit mindestens einen Prozessor (3) und einen Speicher (5) aufweist, wobei das Verfahren Folgendes umfasst:
Zuteilen von Ressourcen des mindestens einen Prozessors (3) und des Speichers zu mehreren Gastsystemen (18, 20, 22, 30) durch eine Virtualisierungsschicht (24),
Ermöglichen einer Kommunikation zwischen mindestens zwei der Gastsysteme über eine Interpartitions-Kommunikationsverbindung durch die Virtualisierungsschicht (24),
Empfangen einer oder mehrerer Nachrichten (M1, M2) von dem Feldbus (62, 86) durch einen Hardware-Treiber (58, 84) eines ersten Gastsystems (18, 30), der auf der Virtualisierungsschicht (24, 56) läuft, wobei das erste Gastsystem ein Echtzeit-Betriebssystem ist, wobei ein Echtzeit-Betriebssystem ein Betriebssystem ist, das vordefinierte oder garantierte Antwortzeiten aufweist,
Bereitstellen der einen oder der mehreren Nachrichten für eine Nachrichten-Weiterleitungskomponente (64, 90) des ersten Gastsystems (18, 30) durch den Hardware-Treiber (58, 84),
Lesen der Nachrichtenkennung durch die Nachrichten-Weiterleitungskomponente (90),
Weiterleiten ausgewählter Nachrichten (M2) mit vordefinierten Nachrichtenkennungen an einen ersten virtuellen Treiber eines zweiten Gastsystems, das auf der Virtualisierungsschicht läuft, über die Interpartitions-Kommunikationsverbindung durch die Nachrichten-Weiterleitungskomponente (64, 90) und
Bereitstellen der Nachrichten, die von dem ersten virtuellen Treiber empfangen werden, für eine Komponente oder Anwendung (54, 70, 72, 74) des zweiten Gastsystems (53) durch den ersten virtuellen Treiber (66, 94).

2. Verfahren nach Anspruch 1, wobei das erste Gastsystem ein Fahrzeug-Betriebssystem und/oder statisch konfiguriert ist.

3. Verfahren nach Anspruch 1 oder 2, wobei das erste Gastsystem eine Basis-Software (32) und eine Laufzeitumgebung (34) umfasst, wobei die Laufzeitumgebung Kommunikationskanäle zwischen der Basis-Software (32) und einer oder mehreren Anwendungen (38) bereitstellt, wobei die Basis-Software (32) den Hardware-Treiber umfasst.

4. Verfahren nach einem der vorhergehenden Ansprüche, wobei das Weiterleiten mindestens einer der empfangenen Nachrichten (M1, M2) an einen ersten virtuellen Treiber eines zweiten Gastsystems durch die Nachrichten-Weiterleitungskomponente (64, 90) Folgendes umfasst:
Bereitstellen der mindestens einen der empfangenen Nachrichten (M1, M2) für einen zweiten virtuellen Treiber (92) des ersten Gastsystems durch die Nachrichten-Weiterleitungskomponente (64, 90), wobei der zweite virtuelle Treiber (92) insbesondere die gleiche Anwendungsprogramm-Schnittstelle zur Nachrichten-Weiterleitungskomponente (64, 90) wie der Hardware-Treiber (58, 84) aufweist, und
Senden der mindestens einen der empfangenen Nachrichten durch den zweiten virtuellen Treiber (92) über die Interpartitions-Kommunikationsverbindung an den ersten virtuellen Treiber (94).

5. Verfahren nach einem der vorhergehenden Ansprüche, wobei der Hardware-Treiber (58, 84) über eine Hardware-Steuerung (9) mit dem Feldbus (62, 86) verbunden ist, wobei die Hardware-Steuerung (9) mehrere Mailboxen (9a, 9b, 9c) umfasst, wobei jede Mailbox (9a, 9b, 9c) für eine Nachricht vorgesehen ist, die eine entsprechende Nachrichtenkennung aufweist, wobei das Verfahren in dem Empfangsschritt ferner Folgendes umfasst:
Lesen der Nachrichten (M1, M2) aus den mehreren Mailboxen durch den ersten Hardware-Treiber (58, 84).

6. Verfahren nach einem der vorhergehenden Ansprüche, wobei das mindestens eine zweite Gastsystem ein Nicht-Echtzeit-Betriebssystem ist, insbesondere für Nicht-Echtzeit-Anwendungen und/oder Infotainment-Anwendungen, insbesondere ein Linux- oder Android-Betriebssystem ist.

7. Verfahren nach einem der vorhergehenden Ansprüche, wobei der erste virtuelle Treiber die gleiche Anwendungsprogramm-Schnittstelle für die mindestens eine Komponente oder Anwendung wie der Hardware-Treiber (58, 84) für die Nachrichten-Weiterleitungskomponente (64, 90) aufweist.

8. Verfahren nach einem der vorhergehenden Ansprüche, ferner Folgendes umfassend:
Decodieren der mindestens einen Nachricht (M1, M2) durch die mindestens eine Anwendung oder Komponente des zweiten Gastsystems.

9. Verfahren nach einem der vorhergehenden Ansprüche, wobei die Nachrichtenkennungen statisch konfiguriert sind und/oder der Priorität der Nachricht entsprechen.

10. Verfahren nach einem der vorhergehenden Ansprüche, wobei der Feldbus ein CAN-(Controller-Area-Network-)Bus ist und/oder wobei die Nachrichten einen oder mehrere aktuelle Status verschiedener Gerät des Kraftfahrzeugs und/oder einen oder mehrere Befehle für verschiedene Geräte des Kraftfahrzeugs enthalten.

11. Verfahren nach einem der vorhergehenden Ansprüche, wobei die Virtualisierungsschicht ein Hypervisor oder ein Mikrokernel ist.

12. Computerprogrammprodukt, Anweisungen umfassend, die bei Ausführung des Programms durch einen Computer den Computer dazu veranlassen, alle Schritte des Verfahrens nach einem der vorhergehenden Ansprüche auszuführen.

13. Steuereinheit für ein Kraftfahrzeug, Folgendes umfassend:
mindestens einen Prozessor (3) und einen Speicher (5),
eine Hardware-Steuerung (9) für einen Feldbus, welcher der Fahrzeugverwendung zugewiesen ist, wobei der Feldbus dafür eingerichtet ist, Nachrichten mit einer Nachrichtenkennung zu transportieren, wobei die Nachrichtenkennung den Inhalt der Nachricht definiert,
eine Virtualisierungsschicht (24), die dafür eingerichtet ist, auf dem mindestens einen Prozessor (3) zu laufen, um mehreren Gastsystemen (18, 20, 22, 30) Ressourcen des mindestens einen Prozessors und des Speichers zuzuteilen und um eine Kommunikation zwischen mindestens zwei der Gastsysteme über eine Interpartitions-Kommunikationsverbindung zu ermöglichen,
ein erstes Gastsystem (18, 30), das auf der Virtualisierungsschicht (24) läuft, wobei das erste Gastsystem ein Echtzeit-Betriebssystem ist und einen Hardware-Treiber (58, 84) umfasst, um auf die Hardware-Steuerung (9) zuzugreifen und um eine oder mehrere Nachrichten (M1, M2) von der Hardware-Steuerung (9) zu empfangen oder zu lesen, wobei die eine oder die mehreren Nachrichten von dem Feldbus empfangen werden, und um die eine oder die mehreren Nachrichten für eine Nachrichten-Weiterleitungskomponente (64) des ersten Gastsystems (18, 30) bereitzustellen, wobei ein Echtzeit-Betriebssystem ein Betriebssystem ist, das vordefinierte oder garantierte Antwortzeiten aufweist, und
mindestens ein zweites Gastsystem (20, 22), das auf der Virtualisierungsschicht lauft und einen ersten virtuellen Treiber zum Empfangen von Nachrichten von dem Feldbus und zum Bereitstellen der empfangenen Nachrichten für eine Komponente oder Anwendung des zweiten Gastsystems umfasst,
wobei die Nachrichten-Weiterleitungskomponente dafür eingerichtet ist, die Nachrichtenkennung zu lesen und ausgewählte Nachrichten (M2) des Fahrzeugfeldbusses mit vordefinierten Nachrichtenkennungen über die Interpartitions-Kommunikationsverbindung an den ersten virtuellen Treiber weiterzuleiten.

14. Steuereinheit nach Anspruch 13, weitere Mittel zum Ausführen aller Schritte des Verfahrens nach einem der Ansprüche 2 bis 11 umfassend.

## Revendications

1. Procédé pour accéder, sur une unité de commande pour un véhicule automobile, à un bus de terrain (62, 86), le bus de terrain étant un bus d'automobile dédié et étant conçu pour transporter des messages comportant un identifiant de message, l'identifiant de message définissant le contenu du message, l'unité de commande comportant au moins un processeur (3) et une mémoire (5), le procédé comprenant :
l'attribution, par une couche de virtualisation (24), des ressources dudit au moins un processeur (3) et de la mémoire à une pluralité de systèmes invités (18, 20, 22, 30) ;
l'activation, par la couche de virtualisation (24), d'une communication entre au moins deux des systèmes invités par l'intermédiaire d'une liaison de communication entre partitions ;
la réception d'un ou de plusieurs messages (M1, M2) du bus de terrain (62, 86) par un dispositif de commande de matériel (58, 84) d'un premier système invité (18, 30) s'exécutant sur la couche de virtualisation (24, 56), le premier système invité étant un système d'exploitation temps réel, dans lequel un système d'exploitation temps réel est un système d'exploitation qui a un temps de réponse prédéfini ou garanti ;
la fourniture, par le dispositif de commande de matériel (58, 84), desdits un ou plusieurs messages à un composant d'acheminement de message (64, 90) du premier système invité (18, 30) ;
la lecture, par le composant d'acheminement de message (90), de l'identifiant de message ;
l'acheminement, par le composant d'acheminement de message (64, 90), des messages sélectionnés (M2) avec des identifiants de message prédéfinis vers un premier dispositif de commande virtuel d'un deuxième système invité s'exécutant sur la couche de virtualisation par l'intermédiaire de la liaison de communication entre partitions ; et
la fourniture, par le premier dispositif de commande virtuel (66, 94), des messages reçus par le premier dispositif de commande virtuel, à un composant ou une application (54, 70, 72, 74) du deuxième système invité (53).

2. Procédé selon la revendication 1, dans lequel le premier système invité est un système d'exploitation d'automobile et/ou est configuré statiquement.

3. Procédé selon la revendication 1 ou 2, dans lequel le premier système invité comprend un logiciel de base (32) et un environnement d'exécution (34), l'environnement d'exécution fournissant des canaux de communication entre le logiciel de base (32) et une ou plusieurs applications (38), dans lequel le logiciel de base (32) comprend le dispositif de commande de matériel.

4. Procédé selon l'une des revendications précédentes, dans lequel l'acheminement, par le composant d'acheminement de message (64, 90), d'au moins l'un des messages (M1, M2) reçus vers un premier dispositif de commande virtuel d'un deuxième système invité comprend :
la fourniture, par le composant d'acheminement de message (64, 90), dudit au moins un des messages (M1, M2) reçus à un deuxième dispositif de commande virtuel (92) du premier système invité, dans lequel, en particulier, le deuxième dispositif de commande virtuel (92) a la même interface de programme d'application vers le composant d'acheminement de message (64, 90) que le dispositif de commande de matériel (58, 84) ; et
l'envoi, par le deuxième dispositif de commande virtuel (92), dudit au moins un des messages reçus au premier dispositif de commande virtuel (94) par l'intermédiaire de la liaison de communication entre partitions.

5. Procédé selon l'une des revendications précédentes, dans lequel le dispositif de commande de matériel (58, 84) est connecté, par l'intermédiaire d'un contrôleur de matériel (9), au bus de terrain (62, 86), le contrôleur de matériel (9) comprenant une pluralité de boîtes aux lettres (9a, 9b, 9c), dans lequel chaque boîte aux lettres (9a, 9b, 9c) est destinée à un message ayant un identifiant de message respectif, le procédé comprenant en outre, à l'étape de réception :
la lecture, par le premier dispositif de commande de matériel (58, 84), des messages (M1, M2) de la pluralité de boîtes aux lettres.

6. Procédé selon l'une des revendications précédentes, dans lequel ledit au moins un deuxième système invité est un système d'exploitation non temps réel, en particulier pour des applications non temps réel et/ou des applications d'infoloisirs, en particulier est un système d'exploitation Linux ou Android.

7. Procédé selon l'une des revendications précédentes, dans lequel le premier dispositif de commande virtuel a la même interface de programme d'application pour ledit au moins un composant ou application que le dispositif de commande de matériel (58, 84) pour le composant d'acheminement de message (64, 90).

8. Procédé selon l'une des revendications précédentes, comprenant en outre :
le décodage dudit au moins un message (M1, M2) par ledit au moins un composant ou application du deuxième système invité.

9. Procédé selon l'une des revendications précédentes, dans lequel les identifiants de message sont configurés statiquement et/ou correspondent à la priorité du message.

10. Procédé selon l'une des revendications précédentes, dans lequel le bus de terrain est un bus de réseau CAN (Controller Area Network), et/ou dans lequel les messages contiennent un ou plusieurs états actuels de différents dispositifs du véhicule automobile et/ou une ou plusieurs commandes pour différents dispositifs du véhicule automobile.

11. Procédé selon l'une des revendications précédentes, dans lequel la couche de virtualisation est un hyperviseur ou un micronoyau.

12. Produit-programme d'ordinateur comprenant des instructions, qui, lorsque le programme est exécuté par un ordinateur, amènent l'ordinateur à effectuer toutes les étapes du procédé selon l'une quelconque des revendications précédentes.

13. Unité de commande pour un véhicule automobile comprenant :
au moins un processeur (3) et une mémoire (5) ;
un contrôleur de matériel (9) pour un bus de terrain dédié pour une utilisation automobile, le bus de terrain est conçu pour transporter des messages comportant un identifiant de message, l'identifiant de message définissant le contenu du message ;
une couche de virtualisation (24) conçue pour s'exécuter sur ledit au moins un processeur (3), pour attribuer les ressources dudit au moins un processeur et de la mémoire à une pluralité de systèmes invités (18, 20, 22, 30), et pour permettre une communication entre au moins deux des systèmes invités par l'intermédiaire d'une liaison de communication entre partitions ;
un premier système invité (18, 30) s'exécutant sur la couche de virtualisation, le premier système invité étant un système d'exploitation temps réel, et comprenant un dispositif de commande de matériel pour accéder au contrôleur de matériel (9) et pour recevoir ou lire un ou plusieurs messages (M1, M2) provenant du contrôleur de matériel (9), lesdits un ou plusieurs messages étant reçus du bus de terrain, et pour fournir lesdits un ou plusieurs messages à un composant d'acheminement de message (64) du premier système invité (18, 30), dans laquelle un système d'exploitation temps réel est un système d'exploitation qui a un temps de réponse prédéfini ou garanti ; et
au moins un deuxième système invité (20, 22) s'exécutant sur la couche de virtualisation comprenant un premier dispositif de commande virtuel pour recevoir des messages du bus de terrain et fournir les messages reçus à un composant ou une application du deuxième système invité ;
dans laquelle le composant d'acheminement de message est conçu pour lire l'identifiant de message et pour acheminer les messages sélectionnés (M2) du bus de terrain d'automobile avec des identifiants de message prédéfinis vers le premier dispositif de commande virtuel par l'intermédiaire de la liaison de communication entre partitions.

14. Unité de commande selon la revendication 13, comprenant des moyens supplémentaires pour effectuer toutes les étapes du procédé selon l'une quelconque des revendications 2 à 11.
